Europäisches Patentamt

European Patent Office

Office européen des brevets

(19)

(11) **EP 0 916 107 B1**

(12) **EUROPÄISCHE PATENTSCHRIFT**

(45) Veröffentlichungstag und Bekanntmachung des Hinweises auf die Patenterteilung:
**11.02.2004  Patentblatt 2004/07**

(21) Anmeldenummer: 97936567.3

(22) Anmeldetag: **28.07.1997**

(51) Int Cl.$^7$: **G02B 23/24**, A61B 1/002

(86) Internationale Anmeldenummer:
**PCT/DE1997/001592**

(87) Internationale Veröffentlichungsnummer:
**WO 1998/004949 (05.02.1998 Gazette 1998/05)**

(54) **ENDOSKOP MIT WENIGSTENS EINEM UMKEHRSYSTEM MIT INHOMOGENEM BRECHUNGSINDEX**

ENDOSCOPE WITH AT LEAST ONE REVERSAL SYSTEM WITH A NON-HOMOGENEOUS REFRACTION INDEX

ENDOSCOPE AVEC AU MOINS UN SYSTEME D'INVERSION A INDICE DE REFRACTION NON HOMOGENE

(84) Benannte Vertragsstaaten:
**DE FR GB IT**

(30) Priorität: **28.07.1996  DE 19630368**
**07.07.1997  DE 19729002**

(43) Veröffentlichungstag der Anmeldung:
**19.05.1999  Patentblatt 1999/20**

(73) Patentinhaber: **Karl Storz GmbH & Co. KG**
**78532 Tuttlingen (DE)**

(72) Erfinder: **LEI, Fang**
**D-78591 Durchhausen (DE)**

(74) Vertreter: **Popp, Eugen, Dr.**
**Dr. Münich & Kollegen**
**c/o MEISSNER, BOLTE & PARTNER**
**Widenmayerstrasse 48**
**80538 München (DE)**

(56) Entgegenhaltungen:
EP-A- 0 646 821          US-A- 4 641 927
US-A- 4 783 154          US-A- 4 988 172
US-A- 5 206 759          US-A- 5 377 047

**Beschreibung**

**Technisches Gebiet**

Die Erfindung bezieht sich ein Endoskop gemäß dem Oberbegriff des Patentanspruchs 1.

**Stand der Technik**

Ein gattungsgemäßes Endoskop ist aus der US-PS 4,783,154 bekannt. Dieses bekannte Endoskop weist ein distal angeordnetes Objektiv und ein optisches Übertragungssystem auf, das das Bild des am distalen Ende angeordneten Objektivs zum proximalen Ende, d.h. zu dem außerhalb des Hohlraums befindlichen Ende des Endoskops überträgt. Das Übertragungssystem weist wenigstens ein Umkehrsystem auf, das aus zwei symmetrischen Gliedern besteht, von denen jedes aus einer Stablinse und einer optisch dünnen plankonkaven Linse besteht. Die Stablinsen, die u.a. plane Stirnflächen aufweisen können, bestehen aus einem Material mit variierendem bzw. inhomogenem Brechungsindex.

Auf die US-PS 4,783,154 und den auf dem Deckblatt dieser Druckschrift genannten Stand der Technik wird im übrigen zur Erläuterung aller hier nicht näher beschriebenen Einzelheiten ausdrücklich verwiesen.

In der US 4,641,924 und der EP 646 821 A2 werden Umkehrsysteme beschrieben, welche aus zwei zueinander spiegelbildlich aufgebauten Gliedern bestehen. Die in der US 4,641,924 beschriebenen Glieder sind aus GRIN-Stäben aufgebaut. Zur Korrektur der Farblängsfehler dieser GRIN-Stäbe werden plankonvexe Linsen vorgeschlagen. Weitere Abbildungsfehler werden nicht diskutiert. In der EP 646 821 A2 werden Glieder offenbart, die aus herkömmlichen Stablinsen und plankonvexen Linsen aus Polymeren aufgebaut sind. Die Korrektur einzelner Abbildungsfehler wird nicht diskutiert.

Unter Umkehrsystem - auch als Relaislinsensystem bezeichnet - wird im Rahmen der vorliegenden Anmeldung ein optisches System verstanden, das (wenigstens) eine 1:1-Abbildung ausführt. In Endoskopen werden in der Regel mehrere - bevorzugt eine ungerade Zahl von Umkehrsystemen - zu einem Übertragungssystem mit einer der Zahl der Umkehrsysteme entsprechenden Zahl von Bildumkehrungen zusammengesetzt.

Bei bekannten Endoskopen mit ausschließlich aus homogenem Material bestehenden Linsen bestehen die beiden Glieder jedes Umkehrsystems häufig aus mehr als aus zwei Elementen.

Bei dem aus der US-PS 4,783,154 bekannten gattungsgemäßen Endoskop steht ausschließlich der Ersatz von mehreren Linsenelementen herkömmlicher Endoskope durch wenigstens ein Linsenelement mit inhomogenem Brechungsindex, nicht jedoch die Verbesserung der "Abbildungsleistung" verglichen mit bekannten Endoskopen im Vordergrund.

Ferner ist es aus dem Artikel "Correction of chromatic Aberrations in GRIN endoscopes" von Dennis C. Leiner und Rochelle Prescott, erschienen in APPLIED OPTICS, Vol. 22, No. 3, S.383 ff., bekannt, chromatische Bildfehler durch den Einsatz von Linsen zu verringern, die aus einem Material mit inhomogenem, d.h. variierendem Brechungsindex bestehen.

Bei Endoskopen, wie sie in der Medizin oder in der Technik zur Beobachtung in Hohlräumen, wie Körperhöhlen, Brennräumen von Motoren, Düsentriebwerken etc. eingesetzt werden, steht jedoch nicht die Korrektur chromatischer Bildfehler, sondern folgendes Problem im Vordergrund:

Je nach Anwendungsfall müssen Endoskope mit unterschiedlicher Länge eingesetzt werden. Um den Aufbau der Endoskope "standardisieren" zu können, ist es allgemein üblich, Endoskope unterschiedlicher Länge mit einer unterschiedlichen Zahl (1, 3, 5,...) von Umkehrsystemen zu versehen, wobei die Umkehrsysteme unabhängig von der Länge des Endoskops immer identisch ausgebildet sind.

Die bislang tatsächlich eingesetzten Umkehrsysteme haben eine bestimmte Bildfeldkrümmung bzw. -wölbung. Die kumulierte Bildfeldkrümmung des Übertragungssystems ist damit von der Zahl der eingesetzten Umkehrsysteme abhängig. Bei den bekannten derzeit kommerziell erhältlichen Endoskopen wird die Bildfeldkrümmung des Übertragungssystems, d.h. die "aufaddierten bzw, kumulierten Bildfeldkrümmungen" der Umkehrsystems durch eine entgegengesetzte Bildfeldkrümmung des jeweiligen Objektivs "kompensiert". Dies bedeutet, daß die Hersteller von Endoskopen für "unterschiedlich lange" Endoskope unterschiedliche Objektive einsetzen und damit bereit halten müssen, um Endoskope mit einer Länge und damit einer unterschiedlichen Zahl von Umkehrsystemen entsprechend dem jeweiligen Anwendungsfall auf Bestellung kurzfristig fertigen zu können.

Ein weiterer, nicht zu vernachlässigender Kostenaufwand resultiert aus der Berechnung einer Mehrzahl eigentlich-beispielsweise hinsichtlich des Blickwinkels und/oder des Bildwinkels - gleicher Objektive, die sich nur hinsichtlich ihrer Bildfeldkrümmung unterscheiden, damit sie mit einer unterschiedlichen Zahl von Umkehrsystemen einsetzbar sind.

Diese Lagerhaltungs- und Berechnungsprobleme ließen sich umgehen, wenn jedes Umkehrsystem und damit auch das Übertragungssystem keine bzw. eine vernachlässigbar kleine Bildfeldkrümmung hätten. Damit könnte unabhängig von der Länge des Endoskops immer das selbe Objektiv Verwendung finden.

Aus der Literatur und insbesondere der Patentliteratur sind verschiedene Vorschläge für Umkehrsysteme für Endoskope bekannt, die keine bzw. eine vernachlässigbar kleine Bildfeldkrümmung aufweisen. Die bekannten Vorschläge haben jedoch den Nachteil, daß sie eine vergleichsweise hohe Zahl von Linsen für jedes Umkehrsystem erfordern, so daß die Herstellkosten für kommerzielle Anwendungen in der Technik oder Medizin zu hoch sind.

**Darstellung der Erfindung**

Der Erfindung liegt die Aufgabe zugrunde, ein Endoskop anzugeben, dessen optisches Übertragungssystem aus Umkehr- bzw. Relaislinsensystemen besteht, deren Bildfeldkrümmung bei einfacher Konstruktion so gering ist, daß auch bei einer stark unterschiedlichen Zahl von Umkehr- bzw. Relaislinsensystemen keine Kompensation der Bildfeldkrümmung bzw. -wölbung des Übertragungssystems durch das distal angeordnete Objektiv erforderlich ist, so daß unabhängig von der Zahl der Umkehr- bzw. Relaislinsensysteme immer das selbe Objektiv eingesetzt werden kann.

Eine erfindungsgemäße Lösung dieser Aufgabe ist im Patentanspruch 1 angegeben. Weiterbildungen der Erfindung sind Gegenstand der Ansprüche 2 folgende.

Erfindungsgemäß ist erkannt worden, daß die gestellte Aufgabe dadurch gelöst werden kann, daß von einem Endoskop gemäß dem Oberbegriff des Patentanspruchs 1 ausgegangen und dieses Endoskop derart weitergebildet wird, dass die Stablinsen einen überkorrigierten Farblängsfehler aufweisen, dass die optisch dünnen Linsen, die den Farblängsfehler der Stablinsen korrigieren, plankonvexe Linsen sind, und dass das wenigstens eine Umkehrsystem eine äußerst geringe Bildfeldkrümmung bzw. -wölbung aufweist.

Der Brechungsindex, der in Radialrichtung (also senkrecht zur optischen Achse) variiert, nimmt als Funktion des Radius mit zunehmendem Abstand von der optischen Achse radialsymmetrisch ab. Aufgrund der positiven Dispersion nimmt ferner der Brechungsindex mit zunehmender Wellenlänge ab.

Dabei geht die Erfindung von folgender Grundüberlegung aus:

Ein herkömmliches Umkehrsystem mit örtlich nicht variierendem Brechungsindex, das zwei zur Blende symmetrische Glieder aufweist, von denen jedes eine Stablinse aufweist, - wie es beispielsweise von Hopkins vorgeschlagen worden ist und es derzeit von einer Reihe von Herstellern gefertigt wird - weist eine starke Bildfeldwölbung und einen großen Astigmatismus auf. Diese Bildfehler müssen durch ein kompliziertes Design des Objektivs kompensiert werden.

Andererseits weisen Umkehrsysteme mit Stablinsen bzw. Stäben mit inhomogenem Brechungsindex (GRIN-Stäbe) Farbfehler auf, die ebenfalls durch das Objektiv kompensiert werden müssen.

Erfindungsgemäß werden die Nachteile der bekannten Umkehrsysteme dadurch vermieden, daß anstelle einer Stablinse bei herkömmlicher Ausgestaltung ein GRIN-Stab verwendet wird, : Durch die Inhomogenität des Brechungsindex ist es möglich, bei planen Endflächen die gewünschte optische Wirkung zu erzielen und dennoch den Astigmatismus und die Bildfeldwölbung praktisch vollständig zu korrigieren. Die dünne plankonvexe Linse, die einen unterkorrigierten Farblängsfehler aufweist, dient im wesentlichen zur Korrektur des Farblängsfehlers des GRIN-Stabs.

Durch die erfindungsgemäße Ausbildung der Umkehr- bzw. Relaislinsensysteme ist es damit möglich, nicht nur die chromatischen Bildfehler von Übertragungssystemen von Endoskopen zu korrigieren, sondern auch die Bildfeldkrümmung bzw. -wölbung jedes Umkehrsystems so klein zu halten, daß auch bei einer stark unterschiedlicher Zahl von Umkehrsystemen und damit über eine große Variationsbreite von Endoskoplängen keine unterschiedlichen Objektive erforderlich sind: In der Praxis kann aufgrund der erfindungsgemäßen Ausbildung der Umkehrsysteme für Endoskope bei zwischen 1 und 15 Umkehr- bzw. Relaislinsensystemen das selbe Objektiv verwendet werden, ohne daß inakzeptable Bildfehler und insbesondere Bildfeldwölbungen auftreten würden.

Da alle Bildfehler im Umkehrsystem korrigiert sind, erhält man ein modulares Umkehrsystem, das in einer praktisch beliebigen Zahl zu einem Übertragungssystem kombiniert werden kann !

Ausdrücklich soll auf folgendes verwiesen werden: In der Praxis wird normalerweise eine ungerade Zahl von Umkehrungen verwendet, da eine ungerade Zahl von Umkehrungen zusammen mit der Umkehrung durch das Okular ein aufrechtes Bild ergibt. Selbstverständlich ist es aber möglich, anstelle einer ungeraden Zahl von Umkehrungen eine gerade Zahl zu verwenden und das Bild optisch - beispielsweise durch ein Prisma - oder - bei Verwendung eines elektronischen Bildaufnehmers - elektronisch aufzurichten !

Weiterbildungen der Erfindung sind Gegenstand der Ansprüche 2 folgende:

Gemäß Anspruch 2 ist die plane Fläche der jeweiligen dünnen Linse der Stablinse des selben Gliedes zugekehrt. Dies vereinfacht den Aufbau der einzelnen Umkehrsysteme insbesondere dann, wenn gemäß Anspruch 3 die Stablinse und die dünne(n) Linse(n) jedes Gliedes miteinander verkittet sind, beträchtlich. Aber auch dann, wenn die Linsen nicht verkittet sind, wird der Zusammenbau durch-aufgrund der sich gegenüberliegenden planen Flächen-einfacher aufgebauten Abstandshalter vereinfacht.

Der erfindungsgemäße Aufbau hat den weiteren Vorteil, daß es nicht erforderlich ist, daß auch die dünne(n) Linse(n) aus einem Material mit inhomogenem Brechungsindex besteh(t)(en). Somit kann gemäß Anspruch 4 die dünne plankonvexe Linse vergleichsweise einfach aufgebaut sein und aus einem Material mit homogenem Brechungsindex bestehen.

Im Anspruch 1 ist eine Bedingung für den Krümmungsradius r der gekrümmten Fläche der plankonvexen Linse mit einer axialen Dicke d angegeben. Gemäß der erfindungsgemäß aufgefundenen Ungleichung gilt:

$$0.9 \cdot \frac{(n_1 - 1) \cdot v_1}{1 - n_1 \cdot v_1 \cdot \Delta n_{gl}} \cdot \left( \frac{n_1}{n_g} \cdot \Delta L_{CF} - \Delta n_{gl} \cdot d \right) \leq \tau \leq 13 \cdot \frac{(n_1 - 1) \cdot v_1}{1 - n_1 \cdot v_1 \cdot \Delta n_{gl}} \cdot \left( \frac{n_1}{n_g} \cdot \Delta L_{CF} - \Delta n_{gl} \cdot d \right)$$

mit

$$\Delta n_{gl} = \frac{n_g - 1}{n_g \cdot v_g} - \frac{n_1 - 1}{n_1 - v_1};$$

dabei bedeuten:

$n_g$ Brechungsindex des inhomogenen Materials auf der optischen Achse,
$v_g$ Abbe'sche Zahl des inhomogenen Materials auf der optischen Achse,
$n_1$ Brechungsindex des Materials der dünnen Linse,
$v_1$ Abbe'sche Zahl des Materials der dünnen Linse,
$\Delta L_{CF}$ die axiale Farbaberration des inhomogenen Materials.

Die Korrektur der Farbaberration bei gleichzeitiger Ebnung des Bildfeldes wird weiter verbessert, wenn für die Beträge der Brennweite $f_g$ der Stablinse aus einem Material mit einem inhomogenem Brechungsindex und der Brennweite $f_1$ der dünnen Linse gemäß Anspruch 6 gilt:

$$| f_g / f_1 | > 0{,}1$$

Im Anspruch 5 ist angegeben, daß der Brechungsindex des inhomogenen Materials der Stablinsen ausgehend von der optischen Achse nach außen, also mit zunehmendem Abstand von der optischen Achse abnimmt. Die Funktion der Abnahme kann dabei insbesondere einen wenigstens in etwa parabelförmigen Verlauf haben. Einen derartigen Verlauf kann man beispielsweise dadurch erhalten, daß man Glasstäbe aus einem geeigneten Grundmaterial in ein Ionenaustauscherbad einbringt. Durch den Ionenaustausch erhält man in Radialrichtung - also normal zur Umfangsfläche der Glasstäbe-die gewünschte Änderung des Brechungsindex. Selbstverständlich kann man anstelle von Glasstäben auch Stäbe aus einem Kunststoffmaterial einsetzen.

In den Ansprüchen 7 und 8 sind Materialdaten für ein kommerziell erhältliches Material mit inhomogenem Brechungsindex angegeben, das für die Realisierung der Erfindung besonders vorteilhaft ist:

Gemäß Anspruch 7 hat der Brechungsindex auf der optischen Achse für die Wellenlänge $\lambda$ = 587,6 nm den Wert 1,5359, der bei einem Abstand |r| = 1,35 mm von der optischen Achse um $2{,}8 \ast 10^{-3}$ abgenommen hat. Eine derartige Variation des Brechungsindex läßt sich mit bekannten Methoden für die Erzeugung eines variierenden Brechungsindex realisieren und ist für Endoskope, die einen Durchmesser von ca. 1,5 bis mehr als 8mm, bevorzugt 4mm haben, besonders geeignet. Die angegebenen Daten sind selbstverständlich nur exemplarisch zu verstehen.

Im Anspruch 8 ist eine bevorzugte Möglichkeit für die insbesondere parabelformige Wellenlängen-Abhängigkeit des Brechungsindex angegeben, gemäß der gilt:

$$n( \lambda = 486{,}1 \text{ nm}) = 1{,}5430$$

$$n( \lambda = 587{,}6 \text{ nm}) = 1{,}5359$$

$$n( \lambda = 656{,}3 \text{ nm}) = 1{,}5329$$

Bei dem im Anspruch 9 gekennzeichneten Ausführungsbeispiel ist auf jeder Seite der Stablinse mit planen Flächen eine plankonvexe Linse vorgesehen, die aus einem Material mit homogenem oder inhomogenem Brechungsindex bestehen kann.

Bei einem Umkehrsystem mit nur einer Bildumkehrung können hierdurch die Bildfehler und insbesondere die Bildfeldkrümmung bzw. - wölbung noch weiter reduziert werden.

Insbesondere ist es jedoch möglich, aus zwei symmetrischen Gliedern bestehende Umkehrsysteme zu anzugeben, die wenigstens drei Bildumkehrungen ausführen, so daß sich in der Stablinse jedes Gliedes ein Zwischenbild befindet (Anspruch 12).

Bei einer weiteren bevorzugten Ausführungsform der Erfindung weist jedes Glied eine Stablinse aus einem Material mit inhomogenem Brechungsindex und zwei plankonvexe Linsen mit homogenem Brechungsindex auf, wobei in jedem Umkehrsystem drei Bildumkehrungen ausgeführt werden.

Das erfindungsgemäße System hat damit den Vorteil, mit nur sechs Elementen drei Bildumkehrungen zu ermöglichen.

Die im Anspruch 10 angegebene Ausführungsform hat den zusätzlichen Vorteil, daß bei weiter verbesserten optischen Eigenschaften der Aufbau und damit die Montage eines erfindungsgemäßen Endoskops dadurch vereinfacht wird, daß wenigstens eine der beiden plankonvexen Linsen und nach Anspruch 11 bevorzugt beide Linsen mit der Stablinse verkittet sind.

In jedem Falle ist es damit möglich, daß das distal angeordnete Objektiv derart aufgebaut ist, daß es praktisch keine Bildfeldkrümmung bzw. -wölbung hat, so daß ein- und dasselbe Objektiv unabhängig von der Zahl der jeweils benötigten Umkehrungen eingesetzt werden kann.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird; es zeigen:

Fig. 1     einen Linsenschnitt durch ein erstes Ausführungsbeispiel der Erfindung,
Fig. 2a    einen Linsenschnitt durch ein zweites Ausführungsbeispiel der Erfindung mit 0°-Objektiv,
Fig. 2b    das bei dem Ausführungsbeispiel gemäß Fig. 2a verwendete 0°-Objektiv,
Fig. 3a    das zweite Ausführungsbeispiel mit einem 30°-Objektiv,
Fig. 3b    das bei dem Ausführungsbeispiel gemäß Fig. 3a verwendete 30°-Objektiv,
Fig. 4a    das zweite Ausführungsbeispiel mit einem 70°-Objektiv,
Fig. 4b    das bei dem Ausführungsbeispiel gemäß Fig. 4a verwendete 70°-Objektiv,

## Beschreibung bevorzugter Ausführungsbeispiele

Bei den in den Figuren dargestellten Ausführungsbeispielen ist pauschal mit dem Bezugszeichen 1 ein Objektiv bezeichnet, das am distalen Ende eines nicht näher dargestellten Endoskops angeordnet ist, und ein Bild einer nicht dargestellten Szene in eine Bildebene 2 abbildet.

Das Objektiv 1 kann in an sich bekannter Weise eine bestimmte Blickrichtung - nicht zu verwechseln mit dem Bildwinkel - haben, die typischerweise 0°, 30°, 70° und mehr betragen kann.

Die Bildebene 2 des Objektivs 1 wird von einer Mehrzahl von Relaislinsen- bzw. Umkehrsystemen, die nachstehend noch näher beschrieben werden, und von denen jedes wenigstens eine 1:1-Abbildung ausführt, bis zum proximalen Ende des Endoskops abgebildet.

Bei dem in den Figuren dargestellten Ausführungsbeispielen ist lediglich ein Umkehrsystem dargestellt. Wie bereits ausgeführt, können aufgrund der äußerst geringen Bildfeldkrümmung erfindungsgemäß nahezu beliebige Zahlen von Umkehrsystemen "aneinander gereiht" werden.

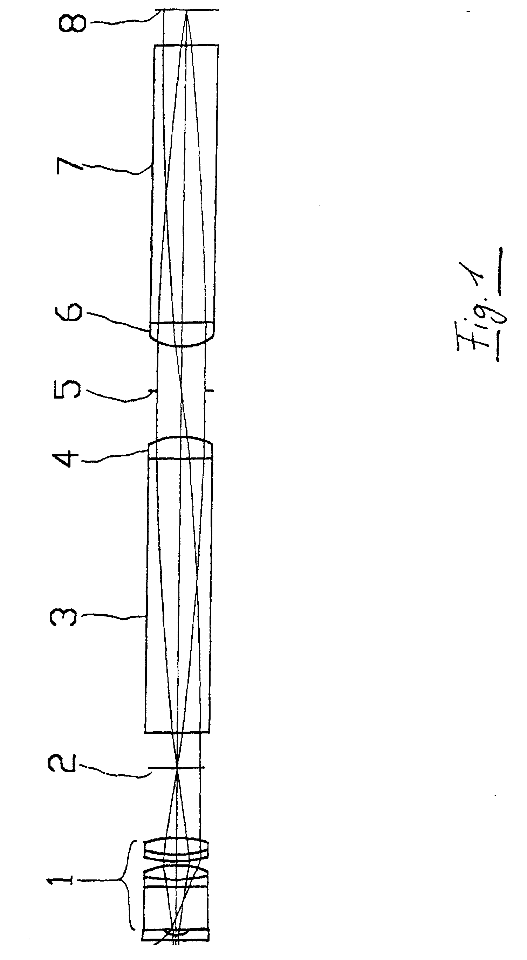

Bei dem in Fig. 1 dargestellten Ausführungsbeispiel besteht das Umkehrsystem aus den Linsenelementen 3, 4, 6 und 7. Das Umkehrsystem bildet die Ebene 2 in die (weitere) Bildebene 8 ab. Mit 5 ist die Blende des (dargestellten) Umkehrsystems bezeichnet.

Bei dem in Fig. 1 gezeigten Ausführungsbeispiel besteht jedes Umkehrsystem aus zwei Gliedern, die bezüglich der Blende 5 symmetrisch sind. Jedes Glied weist einen Stab 3 bzw. 7 mit planen Stirnflächen auf, der aus einem Material mit inhomogenem Brechungsindex besteht; insbesondere weist der Brechungsindex eine Abnahme ausgehend von der optischen Achse in Radialrichtung, also senkrecht zur optischen Achse auf, wobei die Variationsfunktion rotationssymmetrisch ist.

An die der Blende 5 zugekehrte Stirnfläche der Stäbe 3 bzw. 7 ist eine plankonvexe Linse 4 bzw. 6 angekittet, die "optisch dünn" ist.

Wie bereits ausgeführt, besteht jeder der beiden Stäbe 3 bzw. 7 aus einem Material mit inhomogenem Brechungsindex, während die Linsen 4 bzw. 6 aus einem Material mit homogenem Brechungsindex bestehen.

In den folgenden Tabellen 1 bis 3 sind numerische Daten für drei numerische Ausführungsformen des ersten Ausbeispiels angegeben:

Tabelle 1

| Fläche Nr. i | Radius | Abstand | Brechungs-index n | Abbe'sche Zahl v |
|---|---|---|---|---|
| 1 | Plan | 27,54 | 1,5359* | 53,06 |
| 2 | Plan | 1 | 1,62 | 36,35 |
| 3 | -52,31 | 0,84 | Luft | |
| 4 | 52,31 | 1 | 1,62 | 36,35 |
| 5 | Plan | 27,54 | 1,5359* | 53,06 |
| 6 | Plan | | | |

Tabelle 2

| Fläche Nr. i | Radius | Abstand | Brechungs-index n | Abbe'sche Zahl v |
|---|---|---|---|---|
| 1 | Plan | 26,22 | 1,5359* | 53,06 |
| 2 | Plan | 1 | 1,6405 | 60,08 |
| 3 | -38,91 | 4,8 | Luft | |
| 4 | 38,91 | 1 | 1,6405 | 60,08 |
| 5 | Plan | 26,22 | 1,5359* | 53,06 |
| 6 | plan | | | |

Tabelle 3

| Fläche Nr. i | Radius | Abstand | Brechungs-index n | Abbe'sche Zahl v |
|---|---|---|---|---|
| 1 | Plan | 28,84 | 1,5359* | 53,06 |
| 2 | Plan | 2,5 | 1,7847 | 26,07 |
| 3 | -106,54 | 0,66 | Luft | |
| 4 | 106,54 | 2,5 | 1,7847 | 26,07 |
| 5 | Plan | 28,84 | 1,5359* | 53,06 |
| 6 | plan. | | | |

Die Flächennummern i sind von der der Ebene 2 zugekehrten Stirnfläche (Nummer 1) des Stabs 3 bis zu der der Ebene 8 zugekehrten Stirnfläche (Nummer 6) des Stabs 7 "durchgezählt". In üblicher Weise sind Kittflächen nur einmal aufgeführt. Der in der Zeile mit einer Flächen-Nummer i angegebene Abstand ist die Linsendicke bzw. der sog. Luftabstand zwischen den auf der optischen Achse gelegenen Scheiteln der Flächen i und (i+1). Entsprechend sind der Brechungsindex n und die Abbe'sche Zahl v die Materialdaten des Materials zwischen den Flächen i und (i+1). Diese Festlegungen gelten sinngemäß auch für die folgenden Ausführungsbeispiele.

In den Tabellen sind die Flächenradien und die Abstände bzw. Dicken in Millimeter angegeben. Die Brechungsindices n und die Abbe'schen Zahlen sind jeweils für die Wellenlänge $\lambda$ = 587,6 nm angegeben.

In der folgenden Tabelle 4 sind die optischen Eigenschaften, namlich die laterale sphärische Aberration $\delta_\gamma$, der Farbfehler und die sagittale (S) und tangentiale (T) Bildfeldwölbung der vorstehend numerisch angegebenen drei Ausführungsformen des ersten Ausführungsbeispiels mit einem herkömmlichen Umkehrsystem aus homogenem Material, wie es in einem kommerziell erhältlichen System eingesetzt wird, verglichen. Weiterhin sind die entsprechenden Daten für einen Stab 3 bzw. 7 aus inhomogenem Material angegeben:

Tabelle 4

|  | spharische Aberr. $\delta_y$ | Farbfehler | Sagittale Bildfeld-wölbung S | Tangentiale Bildfeldwölbung T |
|---|---|---|---|---|
| Herkömml. System | 0,00007 | 0,00001 | -0,081 | -0,137 |
| Inhom.Stab | 0,00027 | -0,00032 | -0,0039 | 0,0072 |
| 1.Ausführ. | 0,00017 | 0 | -0,0048 | 0,0023 |
| 2.Ausführ. | 0,00035 | -0,00006 | -0,0076 | 0,0014 |
| 3.Ausführ. | 0,00036 | 0,00004 | -0,006 | 0,006 |

Die vorstehende Tabelle 4, in der verschiedene Bildfehler zusammengestellt sind, zeigt, daß die erfindungsgemäßen Systeme verglichen mit herkömmlichen, derzeit in Endoskopen eingesetzten Systemen bei geringfügig größerer - aber in der Praxis vernachlässigbar kleiner - lateraler sphärischer Aberration und geringfügig größerem - in der Praxis ebenfalls vernachlässigbarem - Farbfehler eine um bis zu 2 Größenordnungen geringere Bildfeldwölbung in tangentialer und sagittaler Richtung haben. Insbesondere in tangentialer Richtung wird die Bildfeldwölbung weitestgehend reduziert; dies ist für die Verbesserung der Bildqualität verglichen mit dem Stand der Technik entscheidend.

Bei dem zweiten Ausführungsbeispiel der Erfindung sind an beide Stirnflächen der Stäbe 3 bzw. 7 jeweils eine plankonvexe Linse 4, 4' bzw. 6, 6' angekittet, die "optisch dünn" sind.

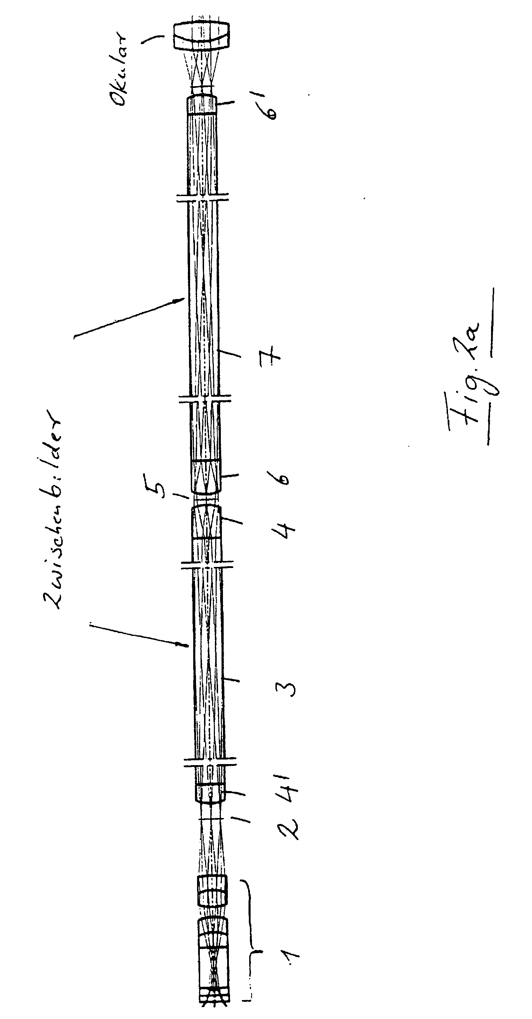

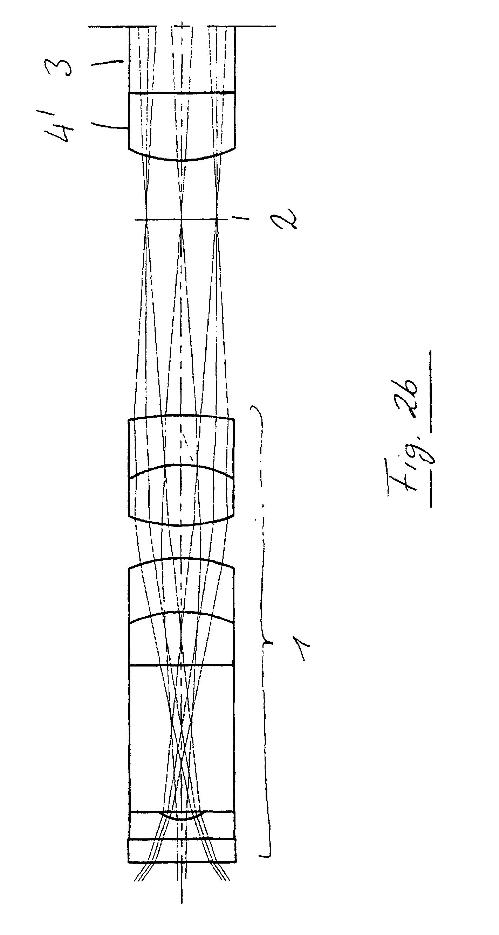

Fig. 2a zeigt den Gesamtaufbau, während Fig. 2b den Aufbau des 0°-Objektivs zeigt.

Jeder der beiden Stäbe 3 bzw. 7 besteht aus einem Material mit inhomogenem Brechungsindex, während die Linsen 4, 4' bzw. 6, 6' aus einem Material mit homogenem Brechungsindex bestehen.

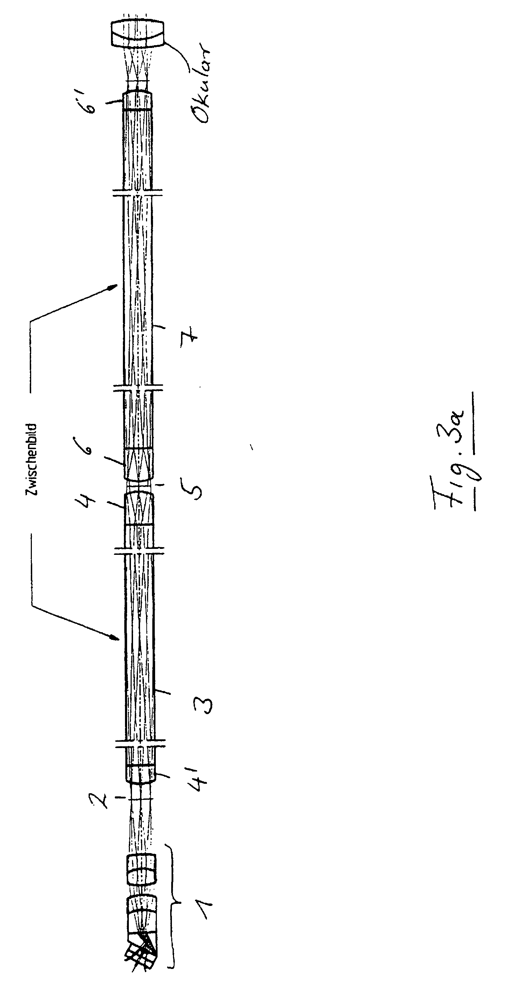

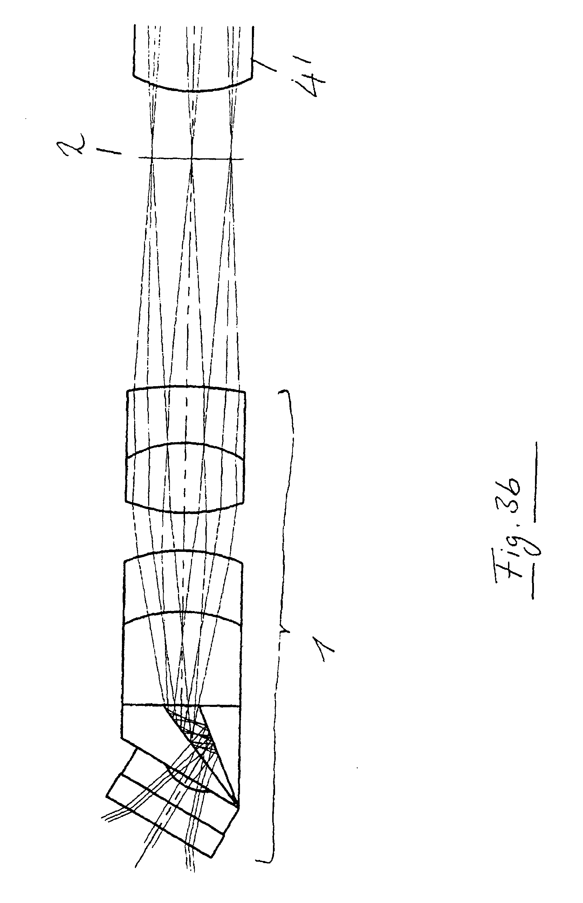

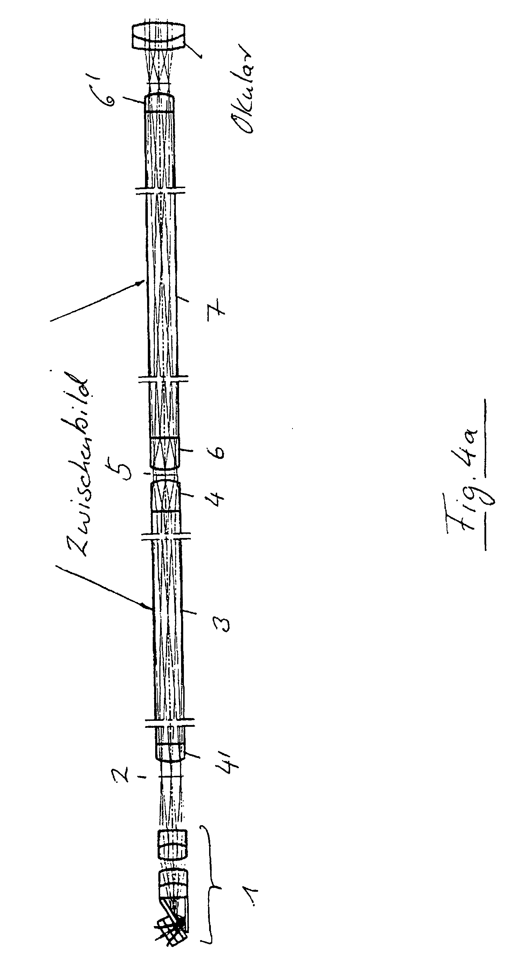

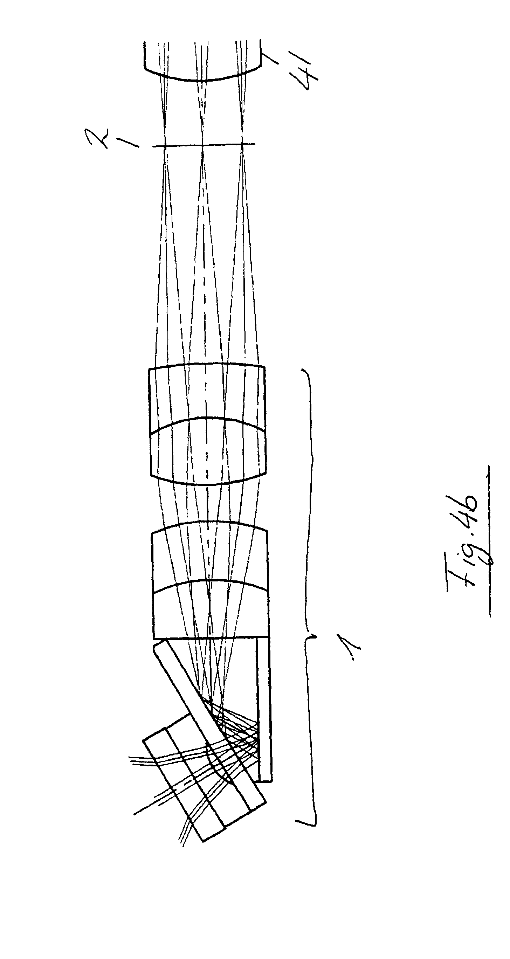

Die Fig. 3a und 4a zeigen den Gesamtaufbau bei Verwendung eines 30° und eines 70°-Objektivs, während die Fig. 3b und 4b den Aufbau des Objektivs zeigen.

In der folgenden Tabelle 5 sind die numerischen Daten für das Umkehrsystem des zweiten Ausführungsbeispiels angegeben, das drei Bildumkehrungen aufweist:

Tabelle 5

| Fläche Nr. i | Radius | Abstand | Brechungs-index n | Abbe'sche Zahl v |
|---|---|---|---|---|
| 1 | 30 | 1,7 | 1,52 | 64,2 |
| 2 | Plan | 84,3 | 1,5359* | 53,06 |
| 3 | Plan | 11,4 | 1,62 | 36,4 |
| 4 | -19,0 | 1 | Luft | |
| 5 | 19,0 | 11,4 | 1,62 | 36,4 |
| 6 | Plan | 84,3 | 1,5359* | 53,06 |
| 7 | Plan | 1,7 | 1,52 | 64,2 |
| 8 | -30 | | | |

Mit * sind - wie bereits bei den vorigen Ausführungsbeispielen - die Materialien mit inhomogenem Brechungsindex bezeichnet.

Wie bereits ausgeführt, muß das Objektiv 1 im Gegensatz zu bekannten Objektiven von Endoskopen keine - für eine bestimmte Zahle von Umkehrsystemen vorgegebene - tangentiale und sagittale (laterale) Bildfeldwölbung haben.

In der folgenden Tabelle 6 sind die numerischen Daten für ein derartiges Objektiv angegeben, wie es in Fig. 2b dargestellt und universell einsetzbar ist:

Tabelle 6

| Fläche Nr. i | Radius | Abstand | Brechungs-index n | Abbe'sche Zahl v |
|---|---|---|---|---|
| 1 | Plan | 0,5 | 1,8 | 46,4 |
| 2 | 1,0 | 0,2 | Luft | |

Tabelle 6   (fortgesetzt)

| Fläche Nr. i | Radius | Abstand | Brechungs-index n | Abbe'sche Zahl v |
|---|---|---|---|---|
| 3 | Plan | 3,8 | 1,6 | 35,7 |
| 4 | Plan | 1,4 | 1,7 | 50,4 |
| 5 | -3,1 | 1,4 | 1,6 | 60,3 |
| 6 | -3,5 | 0,9 | Luft | |
| 7 | 3,7 | 1,6 | 1,5 | 164,2 |
| 8 | -2,6 | 1,3 | 1,8 | 26,1 |
| 9 | -7,5 | | | |

Das Objektiv hat eine Brennweite f von 1,6 mm und einen Bildfeldwinkel (Bildwinkel) 2ω = 70°. Die Bildfeld-wölbung ist sehr klein. Bei anderen Blickrichtungen ist anstelle der planparallelen Platte eine Prismenanordnung mit der selben optischen Weglänge einzusetzen. Beispiele hierfür sind in den Fig. 3b und 4b dargestellt; auf die Angabe von numerischen Daten kann deshalb verzichtet werden.

In jedem Falle ist damit ein modularer Aufbau von unterschiedlich langen Endoskopen mit entsprechend unterschiedlicher Zahl von Umkehrsystemen aus einer einzigen Art von Umkehrsystemen und einem einzigen Objektivtyp (für jede Blickrichtung) möglich. Darüberhinaus wird die Berechnung des Objektivs vereinfacht.

**Patentansprüche**

1.   Endoskop mit einem distal angeordneten Objektiv und einem optischen Übertragungssystem, das das Bild des Objektivs zum proximalen Ende überträgt, und das wenigstens ein Umkehrsystem aufweist, wobei jedes Umkehrsystem aus zwei spiegelbildlich zueinander angeordneten Gliedern besteht, von denen jedes Glied aus einer Stablinse mit planen Stirnflächen und in Radialrichtung inhomogenem Brechungsindex und wenigstens einer optisch dünnen Linse besteht, die eine plane Fläche aufweist,
**dadurch gekennzeichnet, dass**
jedes Umkehrsystem eine äußerst geringe Bildfeldkrümmung bzw. -wölbung aufweist und dass die optisch dünnen Linsen plankonvexe Linsen sind, wobei für den Krümmungsradius r der gekrümmten Fläche einer plankonvexen Linse mit einer axialen Dicke d gilt:

$$0.9 \cdot \frac{(n_l - 1) \cdot v_l}{1 - n_l \cdot v_l \cdot \Delta n_{gl}} \cdot \left( \frac{n_l}{n_g} \cdot \Delta L_{CF} - \Delta n_{gl} \cdot d \right) \le r \le 1.3 \cdot \frac{(n_l - 1) \cdot v_l}{1 - n_l \cdot v_l \cdot \Delta n_{gl}} \cdot \left( \frac{n_l}{n_g} \cdot \Delta L_{CF} - \Delta n_{gl} \cdot d \right)$$

mit

$$\Delta n_{gl} = \frac{n_g - 1}{n_g \cdot v_g} - \frac{n_l - 1}{n_l \cdot v_l}$$

dabei bedeuten:

$n_g$      Brechungsindex des inhomogenen Materials auf der optischen Achse,
$v_g$      Abbe'sche Zahl des inhomogenen Materials auf der optischen Achse,
$n_l$      Brechungsindex des Materials der dünnen Linse,
$v_l$      Abbe'sche Zahl des Materials der dünnen Linse,
$\Delta L_{CF}$   die axialen Farbaberration des inhomogenen Materials,

und für die Beträge der Brennweite $f_g$ der Stablinsen aus einem Material mit einem inhomogenen Brechungsindex und der Brennweite $f_l$ der dünnen Linse gilt:

$$\frac{f_g}{f_l} > 0.1 \; .$$

**2.** Endoskop nach Anspruch 1,
**dadurch gekennzeichnet, daß** die plane Fläche der dünnen Linsen der Stablinse des selben Gliedes zugekehrt ist.

**3.** Endoskop nach Anspruch 2,
**dadurch gekennzeichnet, daß** die Stablinse und die dünne(n) Linse(n) jedes Gliedes verkittet sind.

**4.** Endoskop nach einem der Ansprüche 1 bis 3,
**dadurch gekennzeichnet, daß** die dünne Linse aus einem Material mit homogenem Brechungsindex besteht.

**5.** Endoskop nach einem der Ansprüche 1 bis 4,
**dadurch gekennzeichnet, daß** der Brechungsindex des inhomogenen Materials ausgehend von der optischen Achse nach außen abnimmt.

**6.** Endoskop nach Anspruch 5,
**dadurch gekennzeichnet, daß** die Abnahme rotationssymmetrisch bezogen auf die optische Achse ist und einen wenigstens in etwa parabelförmigen Verlauf als Funktion des Radius hat.

**7.** Endoskop nach Anspruch 6,
**dadurch gekennzeichnet, daß** der Brechungsindex auf der optischen Achse für die Wellenlänge $\lambda = 587,6$ nm den Wert 1,5359 hat, der bei einem Abstand $|r| = 1,35$ mm von der optischen Achse um $2,8 \times 10^{-3}$ abgenommen hat.

**8.** Endoskop nach einem der Ansprüche 1 bis 7,
**dadurch gekennzeichnet, daß** für die Wellenlängen-Abhängigkeit des Brechungsindex gilt:

$$n(\lambda = 486,1 \text{ nm}) = 1,5430$$

$$n(\lambda = 587,6 \text{ nm}) = 1,5359$$

$$n(\lambda = 656,3 \text{ nm}) = 1,5329$$

**9.** Endoskop nach einem der Ansprüche 1 bis 8,
**dadurch gekennzeichnet, daß** auf jeder Seite der Stablinse mit planen Flächen eine plankonvexe Linse vorgesehen ist.

**10.** Endoskop nach Anspruch 9,
**dadurch gekennzeichnet, daß** wenigstens eine der beiden plankonvexen Linsen mit der Stablinse verkittet ist.

**11.** Endoskop nach Anspruch 10,
**dadurch gekennzeichnet, daß** beide plankonvexe Linsen mit der Stablinse verkittet sind.

**12.** Endoskop nach einem der Ansprüche 9 bis 11,
**dadurch gekennzeichnet, daß** sich in der Stablinse jedes Gliedes ein Zwischenbild befindet.

**13.** Endoskop nach einem der Ansprüche 1 bis 12,
**dadurch gekennzeichnet, daß** das distal angeordnete Objek-tiv derart aufgebaut ist, daß es praktisch keine Bildfeldkrümmung bzw. -wölbung hat.

**Claims**

1. Endoscope having a distally disposed objective lens and an optical transmission system which transmits an image of an objective lens to a proximal end and has at least one reversing system, each reversing system consisting of two members disposed in a mirror-image arrangement, each member of which consists of a rod lens having plane end faces and a refractive index which is inhomogeneous in radial direction, and at least one optically thin lens having a plane face,
**characterized in that**
each reversing system has an extremely small curvature or bulge of the image-field, and that the optically thin lenses are plano-convex lenses, the following relationship applying to a radius of curvature r of the curved surface of a plano-convex lens having an axial thickness d:

$$0.9 \cdot \frac{(n_l - 1) \cdot v_l}{1 - n_l \cdot v_l \cdot \Delta n_{gl}} \cdot \left( \frac{n_l}{n_g} \cdot \Delta L_{CF} - \Delta n_{gl} \cdot d \right) \leq r \leq 1.3 \cdot \frac{(n_l - 1) \cdot v_l}{1 - n_l \cdot v_l \cdot \Delta n_{gl}} \cdot \left( \frac{n_l}{n_g} \cdot \Delta L_{CF} - \Delta n_{gl} \cdot d \right)$$

with

$$\Delta n_{gl} = \frac{n_g - 1}{n_g \cdot v_g} - \frac{n_l - 1}{n_l \cdot v_l}$$

the symbols meaning:

$n_g$   refractive index of the inhomogeneous material on the optical axis;
$v_g$   Abbe number of the inhomogeneous material on the optical axis;
$n_l$   refractive index of the material of the thin lens;
$v_l$   Abbe number of the material of the thin lens; and
$\Delta L_{CF}$   axial chromatic aberration of the inhomogeneous material;

and the following relationship applying to the magnitudes of the focal length fg of the rod lenses of a material having an inhomogeneous refractive index and the focal length $f_l$ of the thin lens:

$$\frac{f_g}{f_l} > 0.1 \; .$$

2. Endoscope according to claim 1,
**characterized in that** the plane faces of the thin lenses face the rod lens of the same member.

3. Endoscope according to claim 2,
**characterized in that** the rod lens and the thin lens(es) of each member are cemented together.

4. Endoscope according to any one of claims 1 to 3,
**characterized in that** the thin lens consists of a material having a homogeneous refractive index.

5. Endoscope according to any one of claims 1 to 4,
**characterized in that** the refractive index of the inhomogeneous material decreases in a direction outwards from the optical axis.

6. Endoscope according to claim 5,
**characterized in that** the decrease is rotationally symmetrical with respect to the optical axis and is at least approximately parabolic as a function of the radius.

7. Endoscope according to claim 6,
**characterized in that** the refractive index on the optical axis for the wavelength $\lambda = 587.6$ nm has the value 1.5359 which at a distance |r| = 1.35 mm from the optical axis has decreased by 2.8 • $10^{-3}$.

8. Endoscope according to any one of claims 1 to 7,
   **characterized in that** the following applies to the wavelength-dependence of the refractive index:

$$n ( \lambda = 486.1 \text{ nm}) = 1.5430$$

$$n ( \lambda = 587.6 \text{ nm}) = 1.5359$$

$$n ( \lambda = 656.3 \text{ nm}) = 1.5329$$

9. Endoscope according to any one of claims 1 to 8,
   **characterized in that** a plano-convex lens is provided on each side of the rod lens having plane faces.

10. Endoscope according to claim 9,
    **characterized in that** at least one of the two plano-convex lenses is cemented to the rod lens.

11. Endoscope according to claim 10,
    **characterized in that** both plane-convex lenses are cemented to the rod lens.

12. Endoscope according to any one of claims 9 to 11,
    **characterized in that** an intermediate image is present in the rod lens of each member.

13. Endoscope according to any one of claims 1 to 12,
    **characterized in that** the distally disposed objective lens is constructed so that it has practically no image-field curvature.

## Revendications

1. Endoscope doté d'un objectif agencé distalement et d'un système de transmission optique transmettant l'image de l'objectif à l'extrémité proximale et comprenant au moins un système d'inversion, chaque système d'inversion se composant de deux éléments agencés en symétrie spéculaire l'un par rapport à l'autre, chacun desdits éléments consistant en une lentille en barreau à faces planes et indice de réfraction non homogène dans la direction radiale et en au moins une lentille optiquement mince présentant une face plane, **caractérisé en ce que**
   chaque système d'inversion présente une courbure de champ extrêmement faible et **en ce que** les lentilles optiquement minces sont des lentilles plan-convexes, le rayon de courbure r de la surface incurvée d'une lentille plan-convexe d'une épaisseur axiale d obéissant à l'inéquation suivante :

$$0,9.\frac{(n_l -1).v_l}{1 - n_l.v_l.\Delta n_{gl}}.\left( \frac{n_l}{n_g}.\Delta L_{CF} - \Delta n_{gl}.d \right) \leq r \leq 1,3.\frac{(n_l -1).v_l}{1 - n_l.v_l.\Delta n_{gl}}.\left( \frac{n_l}{n_g}.\Delta L_{CF} - \Delta n_{gl}.d \right)$$

avec

$$\Delta n_{gl} = \frac{n_g - 1}{n_g \cdot v_g} - \frac{n_l - 1}{n_l \cdot v_l}$$

où
$n_g$ est l'indice de réfraction du matériau non homogène sur l'axe optique,
$v_g$ est le nombre d'Abbé du matériau non homogène sur l'axe optique

$n_l$ est l'indice de réfraction du matériau de la lentille mince,

$v_l$ est le nombre d'Abbé du matériau de la lentille mince

$\Delta L_{CF}$ est l'aberration chromatique axiale du matériau non homogène

et la distance focale fg des lentilles en barreau en matériau à indice de réfraction non homogène et la distance focale $f_1$ de la lentille mince obéissant à l'inégalité suivante :

$$\frac{f_g}{f_l} > 0{,}1$$

2. Endoscope selon la revendication 1, **caractérisé en ce que** la face plane des lentilles minces est orientée vers la lentille en barreau du même élément.

3. Endoscope selon la revendication 2, **caractérisé en ce que** la lentille en barreau et la ou les lentilles minces de chaque élément sont collées.

4. Endoscope selon l'une quelconque des revendications 1 à 3, **caractérisé en ce que** la lentille mince est réalisée dans un matériau à indice de réfraction homogène.

5. Endoscope selon l'une quelconque des revendications 1 à 4, **caractérisé en ce que** l'indice de réfraction du matériau non homogène diminue de l'axe optique vers l'extérieur.

6. Endoscope selon la revendication 5, **caractérisé en ce que** la diminution est à symétrie de rotation par rapport à l'axe optique et a un comportement au moins sensiblement parabolique en fonction du rayon.

7. Endoscope selon la revendication 6, **caractérisé en ce que** l'indice de réfraction sur l'axe optique pour une longueur d'onde $\lambda$ = 587,6 nm a une valeur de 1,5359, valeur qui, à une distance |r| = 1,35 mm de l'axe optique diminue de $2{,}8*10^{-3}$.

8. Endoscope selon l'une quelconque des revendications 1 à 7, **caractérisé en ce que** l'indice de réfraction dépend de la longueur d'onde de la manière suivante :

$$n\ (\ \lambda = 486{,}1\ nm) = 1{,}5430$$

$$n\ (\ \lambda = 587{,}6\ nm) = 1{,}5359$$

$$n\ (\ \lambda = 656{,}3\ nm) = 1{,}5329$$

9. Endoscope selon l'une quelconque des revendications 1 à 8, **caractérisé en ce qu'**une lentille plan-convexe est prévue de part et d'autre de la lentille en barreau à faces planes.

10. Endoscope selon la revendication 9, **caractérisé en ce qu'**au moins une des deux lentilles plan-convexes est collée à la lentille en barreau.

11. Endoscope selon la revendication 10, **caractérisé en ce que** les deux lentilles plan-convexes sont collées à la lentille en barreau.

12. Endoscope selon l'une quelconque des revendications 9 à 11, **caractérisé en ce qu'**une image intermédiaire se trouve dans la lentille en barreau de chaque élément.

13. Endoscope selon l'une quelconque des revendications 1 à 12, **caractérisé en ce que** l'objectif agencé distalement est conçu de manière à ce qui n'y ait pratiquement pas de courbure de champ.

Fig. 1

EP 0 916 107 B1

Fig. 2a

Fig. 26

Zwischenbild

2      4   6        6'

1     4'   3       5     7     Okular

Fig. 3a

EP 0 916 107 B1

Fig. 36

Fig. 4a

Fig.46

EP 0 916 107 B1